# EUROPEAN PATENT APPLICATION

(11) **EP 4 020 669 A1**
(43) Date of publication of application: **29.06.2022**
(21) Application number: 21788116.8
(22) Date of filing: 04.02.2021
(51) Int. Cl.: H01M 10/6551, H01M 10/6556, H01M 10/613, H01M 50/20

(54) **BATTERY MODULE AND MANUFACTURING METHOD THEREFOR**

(30) Priority: 13.04.2020 KR 20200044876
(71) Applicant: LG ENERGY SOLUTION, LTD., Seoul 07335 (KR)
(72) Inventor: JEON, Jongpil, Daejeon 34122 (KR); KIM, Donghyun, Daejeon 34122 (KR); CHOI, Jonghwa, Daejeon 34122 (KR); PARK, Myungki, Daejeon 34122 (KR); SEONG, Junyeob, Daejeon 34122 (KR); LEE, Hyoungsuk, Daejeon 34122 (KR)
(74) Representative: Plasseraud IP
(86) International application number: PCT/KR2021/001481
(87) International publication number: WO 2021/210769

(57) **Abstract**

A battery module according to an embodiment of the present disclosure includes a battery cell stack in which a plurality of battery cells are stacked, a module frame for housing the battery cell stack, end plates for covering front and rear surfaces of the battery cell stack, a heat sink formed on a bottom part of the module frame, and a cooling port configured to supply a refrigerant to the heat sink, the module frame includes a module frame protrusion part, which is extended and formed so as to pass through the end plates on the bottom part of the module frame, and the cooling port is disposed in a shape protruding upward from an upper surface of the module frame protrusion part.

## Description

### [TECHNICAL FIELD]

### Cross Citation with Related Application(s)

This application claims the benefit of Korean Patent Application No. 10-2020-0044876 filed on April 13, 2020 in the Korean Intellectual Property Office, the disclosure of which is incorporated herein by reference in its entirety.

The present disclosure relates to a battery module and a method for manufacturing the same, and more particularly to a battery module having a cooling structure, and a method for manufacturing the same.

### [BACKGROUND ART]

A secondary battery has attracted much attention as an energy source in various products such as a mobile device and an electric vehicle. The secondary battery is a potent energy resource that can replace the use of existing products using fossil fuels, and is in the spotlight as an environment-friendly energy source because it does not generate by-products due to energy use.

Recently, along with a continuous rise of the necessity for a large-capacity secondary battery structure, including the utilization of the secondary battery as an energy storage source, there is a growing demand for a battery pack of a multi-module structure which is an assembly of battery modules in which a plurality of secondary batteries are connected in series/parallel.

Meanwhile, when a plurality of battery cells are connected in series/parallel to configure a battery pack, it is common to configure a battery module composed of battery cells first, and then configure a battery pack by using at least one of the battery modules and adding other components.

Such a battery module includes a battery cell stack in which a plurality of battery cells are stacked, a module frame for housing the battery cell stack, and a heat sink for cooling the plurality of battery cells.

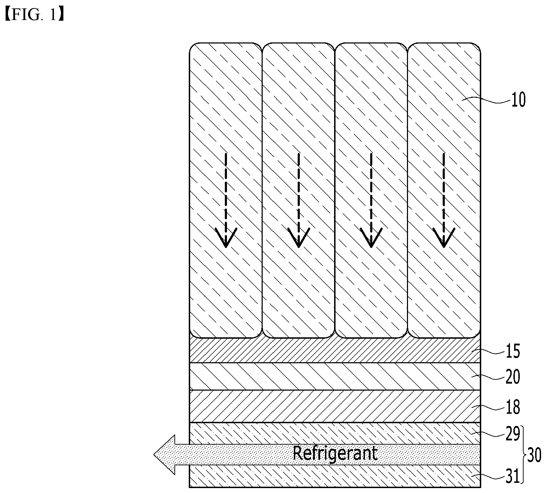

FIG. 1 is a view illustrating a battery module coupled to a heat sink according to the related art.

Referring to FIG. 1, a conventional battery module includes a battery cell stack in which a plurality of battery cells 10 are stacked, a module frame for housing the battery cell stack, and a thermally conductive resin layer 15 located between the bottom part 20 of the module frame and the battery cell stack. Such a battery module can be formed under the bottom part 20 of the module frame and coupled with a heat sink 30 that provides a cooling function to a plurality of battery cells 10, thereby forming a battery pack. At this time, the heat sink 30 includes an inlet through which refrigerant flows in, an outlet through which refrigerant flows out, a lower plate 31 having a cooling flow path for connecting the inlet and the outlet, and an upper plate 29 for covering the lower plate 31. Here, a heat conductive layer 18 may be further formed between the bottom part 20 of the battery module and the heat sink 30.

Conventionally, in order to improve the cooling performance of the battery module and/or the battery pack, a separate cooling structure, for example, a heat sink 30, is required for each battery pack unit. Therefore, the cooling structure tended to be complicated, and the space between the refrigerant and the battery cell laminate 10 was formed by a multi-layered structure consisting of an upper plate 29, a module frame bottom part 29, and the like, whereby there was a limit that it has no choice but to cool the battery cells indirectly.

### [DETAILED DESCRIPTION OF THE INVENTION]

### [Technical Problem]

It is an object of the present disclosure to provide a battery module having improved assembling property of the cooling structure to improve cooling performance, and a method for manufacturing the same.

The objects of the present disclosure are not limited to the aforementioned objects, and other objects which are not described herein should be clearly understood by those skilled in the art from the following detailed description.

### [Technical Solution]

According to one embodiment of the present disclosure, there is provided a battery module comprising: a battery cell stack in which a plurality of battery cells are stacked; a module frame for housing the battery cell stack; end plates for covering front and rear surfaces of the battery cell stack; a heat sink formed on a bottom part of the module frame; and a cooling port configured to supply a refrigerant to the heat sink, wherein the module frame comprises a module frame protrusion part, which is extended and formed so as to pass through the end plates on the bottom part of the module frame, and wherein the cooling port is disposed in a shape protruding upward from an upper surface of the module frame protrusion part.

The cooling port may be coupled to the module frame protrusion part by a fastening member.

The battery module may further include a bracket located between the cooling port and the upper surface of the module frame protrusion part, and the cooling port may be connected to the bracket and the module frame protrusion part by a fastening member.

The battery module may further include a gasket formed between the cooling port and the bracket.

First coupling holes may be formed on both sides of the lower end of the cooling port, second coupling holes may be formed on both sides of the bracket, third coupling holes may be formed on both sides of the module frame protrusion part, and the fastening member may be inserted so as to penetrate the first coupling hole, the second coupling hole, and the third coupling hole to couple the cooling port and the bracket.

A refrigerant tube may be formed in the center of the cooling port, and the refrigerant tube may be connected to a heat sink connection port formed on the module frame protrusion part.

A bracket connection port may be formed in the center of the bracket, the bracket connection port may be formed between the coolant tube and the heat sink connection port, thereby connecting the coolant tube and the heat sink connection port.

The gasket may be formed in an annular shape, and maybe located between the refrigerant tube and the bracket connection port to seal between the refrigerant tube and the bracket connection port.

The battery module may further include a heat sink protrusion part formed so as to correspond to the module frame protrusion part.

According to another embodiment of the present disclosure, there is provided a battery pack comprising the battery module.

According to yet another embodiment of the present disclosure, there is provided a method for manufacturing a battery module, the method comprising the steps of: coupling end plates to the front and rear ends of a module frame in which a battery cell stack is housed; and coupling a cooling port on a module frame protrusion part, with the module frame protrusion part being extended and formed so as to pass through the end plates on the bottom part of the module frame, wherein the step of coupling the end plate to the module frame comprises moving the end plates along a first direction and then coupling the end plates to the module frame, and after the end plates are coupled to the module frame, the cooling port is moved along a second direction intersecting with the first direction, and then connected to the module frame protrusion part.

The method for manufacturing a battery module may further include a step of coupling the cooling port and a bracket located at the lower end of the cooling port to the module frame protrusion part by a fastening member.

The step of coupling the cooling port and the bracket to the module frame protrusion part by a fastening member may include a step of aligning a first coupling hole formed on both sides of the lower end of the cooling port, a second coupling hole formed on both sides of the bracket, and a third coupling hole formed on both sides of the module frame protrusion part; and a step of inserting a bolt so as to penetrate the first coupling hole, the second coupling hole, and the third coupling hole.

The step of coupling the cooling port and the bracket to the module frame protrusion part by a fastening member may further include a step of inserting a gasket between the cooling port and the bracket.

In the step of coupling the end plate to the module frame, the first direction may be a direction vertically directing to a surface that forms an edge of the module frame coupled to the end plate.

In the step of coupling the end plate to the module frame, the second direction may be a direction vertically directing to an upper surface of the module frame protrusion part.

### [ADVANTAGEOUS EFFECTS]

According to the embodiments of the present disclosure, since there is no assembly feature interference between the cooling port and the end plate, the assembling process of the end plate can be simplified and the difficulty of assembly can be improved.

The effects of the present disclosure are not limited to the effects mentioned above and additional other effects not described above will be clearly understood from the description of the appended claims by those skilled in the art.

### [BRIEF DESCRIPTION OF THE DRAWINGS]

FIG. 1 is a view illustrating a battery module coupled to a heat sink according to the related art.
FIG. 2 is a view illustrating a battery module illustrated as a comparative example;
FIG. 3 is a view illustrating an interference due to a cooling port when assembling an end plate formed in FIG. 2.
FIG. 4 is a view illustrating a state in which the end plate of FIG.3 is assembled away from the cooling port.
FIG. 5 is an exploded perspective view of a battery module according to an embodiment of the present disclosure.
FIG. 6 is an exploded perspective view of a cooling port coupled to a battery module according to an embodiment of the present disclosure.
FIG. 7 is a side view illustrating a state in which the cooling port is coupled to a battery module according to the embodiment of the present disclosure.
FIG. 8 is a view illustrating a state in which the end plate is assembled according to an embodiment of the present disclosure.
FIG. 9 is a view illustrating a state in which a cooling port is assembled according to an embodiment of the present disclosure.
FIG. 10 is a view illustrating a state in which the cooling port of FIG. 9 is assembled, as viewed from the side.

### [DETAILED DESCRIPTION OF THE EMBODIMENTS]

It should be appreciated that the exemplary embodiments, which will be described below, are illustratively described to help understand the present disclosure, and the present disclosure may be variously modified to be carried out differently from the exemplary embodiments described herein. However, in the description of the present disclosure, the specific descriptions and illustrations of publicly known functions or constituent elements will be omitted when it is determined that the specific descriptions and illustrations may unnecessarily obscure the subject matter of the present disclosure. In addition, in order to help understand the present disclosure, the accompanying drawings are not illustrated based on actual scales, but parts of the constituent elements may be exaggerated in size.

As used herein, terms such as first, second, and the like may be used to describe various components, and the components are not limited by the terms. The terms are used only to discriminate one component from another component.

Further, the terms used herein are used only to describe specific exemplary embodiments, and are not intended to limit the scope of the present disclosure. A singular expression includes a plural expression unless they have definitely opposite meanings in the context. It should be understood that the terms "comprise", "include", and "have" as used herein are intended to designate the presence of stated features, numbers, steps, constitutional elements, movements, parts or combinations thereof, but it should be understood that they do not preclude a possibility of existence or addition of one or more other features, numbers, steps, movements, constitutional elements, parts or combinations thereof.

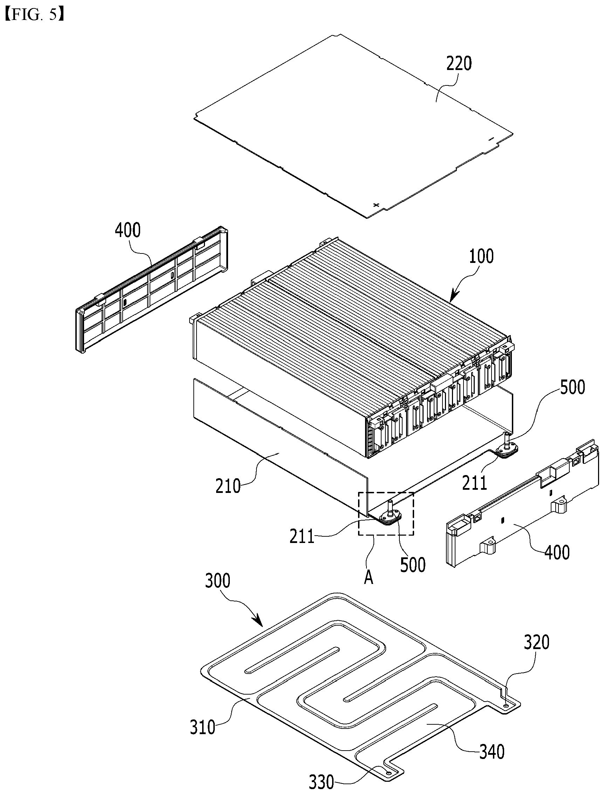

Hereinafter, a battery module to which a cooling port is coupled according to an embodiment of the present disclosure will be described with reference to FIGS. 5 to 7.

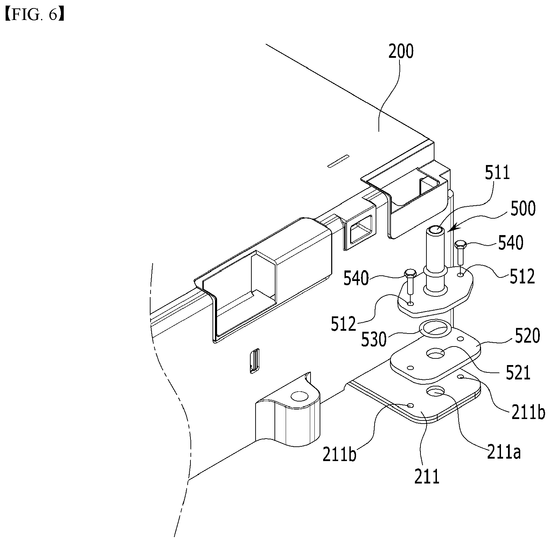

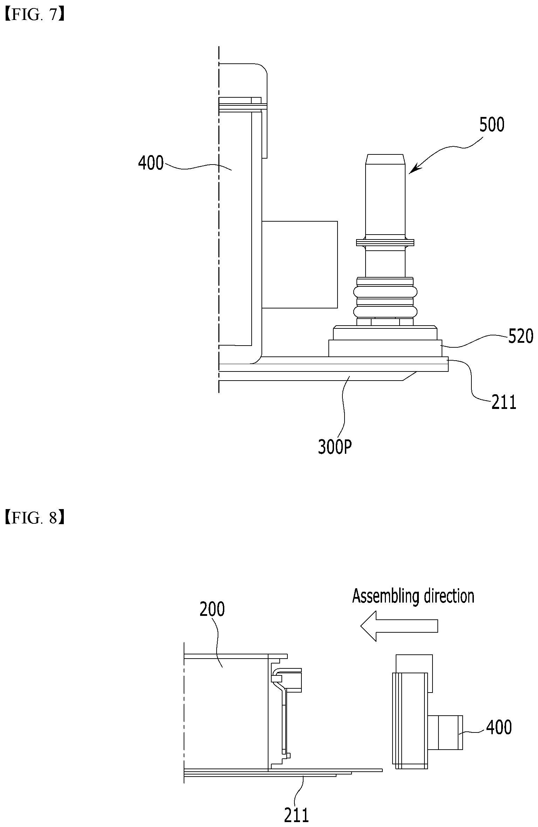

FIG. 5 is an exploded perspective view of a battery module according to an embodiment of the present disclosure. FIG. 6 is an exploded perspective view of a cooling port coupled to a battery module according to an embodiment of the present disclosure. FIG. 7 is a side view illustrating a state in which the cooling port is coupled to a battery module according to the embodiment of the present disclosure.

Referring to FIGS. 5 to 7, a battery module according to an embodiment of the present disclosure includes a battery cell stack 100 in which a plurality of battery cells are stacked, a module frame 200 for housing the battery cell stack 100, end plates 400 for covering front and rear surfaces of the battery cell stack 100, a heat sink 300 formed on a bottom part of the module frame 200, and a cooling port 500 for supplying a refrigerant to the heat sink 300.

Referring to FIG. 6, the battery module according to the embodiment of the disclosure may be configured such that a heat sink 300 and a bottom portion of the module frame 200 are integrally formed, and a cooling port 500 is connected to one end of the heat sink 300. The module frame 200 includes a module frame protrusion part 211 which is extended and formed so as to pass through the end plates 400 on the bottom part of the module frame 200, and the cooling port 500 is connected to the upper surface of the module frame protrusion part, so that a refrigerant is supplied to the heat sink 300 via the module frame protrusion part 211.

At this time, a bracket 520 may be disposed between the cooling port 500 and the module frame protrusion part 211. The cooling port 500 may be connected to the bracket 520 by a fastening member. In this case, a gasket 530 may be disposed between the cooling port 500 and the bracket 520. As a modified example, the bracket 520 may be omitted, and the cooling port 500 may be directly connected to the protrusion part 211 described later by a fastening member.

A battery cell according to the embodiment of the disclosure is a secondary battery, which may be configured of a pouch type secondary battery. The battery cell may be formed of a plurality of cells, and the plurality of battery cells may be stacked so as to be electrically connected to each other, thereby forming the battery cell stack 100. Each of the plurality of the battery cells may include an electrode assembly, a cell case, and an electrode lead protruding from the electrode assembly.

The module frame 200 houses the battery cell stack 100. According to an embodiment of the present disclosure, the module frame 200 may include a lower frame 210 for covering a lower surface and both side surfaces of the battery cell stack 100, and an upper plate 220 for covering an upper surface of the battery cell stack100. The module frame 200 includes a module frame protrusion 211, which is extended and formed so as to passe through the end plates on the bottom part of the module frame 200. The cooling port 500 described above may be seated on an upper side of the module frame protrusion part 211.

However, a structure of the module frame 200 is not limited thereto, and may be a mono frame shape surrounding four surfaces excluding the front and rear surfaces of the battery cell stack 100.

The battery module according to the embodiment of the disclosure may further include end plates 400 for covering the front and rear surfaces of the battery cell stack 100. Through the above-mentioned module frame 200, the battery cell stack 100 housed inside the frame may be physically protected.

Referring to FIG. 5, a heat sink 300 may be formed at a lower part of the module frame 200. The heat sink 300 may include a lower plate 310 that forms a skeleton of the heat sink 300 and makes contact with the bottom part of the module frame 200, an inlet 320 that is formed on one side of the heat sink 300 to supply a refrigerant from the outside to the interior of the heat sink 300, an outlet 330 that is formed on one side of the heat sink and allows a refrigerant flowed inside the heat sink to be discharged to the outside of the heat sink, and a flow passage part 340 that connects the inlet 320 and the outlet 330 and allows the refrigerant to flow.

In detail, the flow passage part 340 may indicate a structure in which the lower plate 310 making contact with a lower surface of a lower frame 210 corresponding to the bottom part of the module frame 200 is formed to be recessed on a lower side. An upper side of the flow passage part 340 is opened, whereby a flow path is formed between the flow passage part 340 and the bottom part of the module frame 200, and thus the refrigerant can flow through the flow path. That is, the battery module according to the embodiment of the disclosure may have an integrated type cooling structure, in which the bottom part of the module frame 200 functions to correspond to the upper plate of the heat sink 300.

Conventionally, a structure in which the refrigerant flows is separately formed on a lower side of the module frame, so that it has no choice but to cool the module frame indirectly and thus, the cooling efficiency is deteriorated. In addition, there was a problem that a separate refrigerant flow structure is formed, which reduces the space utilization of the battery module and the battery pack on which the battery module is mounted. However, according to the embodiment of the present disclosure, the structure in which the heat sink 300 is integrated at a lower part of the module frame 200 can be employed so as to allow the refrigerant to directly flow between the flow passage part 340 and the bottom part of the module frame 200, thereby increasing the cooling efficiency due to direct cooling. Moreover, through the structure in which the heat sink 300 is integrated with the bottom part of the module frame 200, the space utilization of the battery module and the battery pack on which the battery module is mounted can be further increased.

The lower plate 310 may be formed so as to correspond to the bottom part of the module frame 200. The bottom part of the module frame 200 may correspond to the bottom part of the lower frame 210, the lower plate 310 and the bottom part of the lower frame 210 can be coupled to each other through welding, and a rigidity of the entire battery module can be reinforced through the lower plate 310. The lower plate 310 and the bottom part of the lower frame 210 are sealed through welding, whereby the refrigerant can flow without leakage in the flow passage part 340 formed inside the lower plate 310.

Both the inlet 320 and the outlet 330 may be formed on one side of the heat sink 300. In more detail, both the inlet 320 and the outlet 330 may be formed on one side of the heat sink 300 that is formed at a portion at which the end plate 400 is located. The inlet 320 and the outlet 330 may be located at both ends of one side of the heat sink 300, respectively. The inlet 320 and the outlet 330 may be formed at locations corresponding to the module frame protrusion parts 211 so as to be connected to lower surface parts of the module frame protrusion parts 211. For this purpose, the inlet 320 and the outlet 330 may be formed on the heat sink protrusion part 300P protruding from one side of the heat sink 300 to a portion where the module frame protrusion part 211 is located.

The flow passage part 340 may be formed so as to cover the bottom part of the module frame 200 while being bent. The flow passage part 340 is formed in most of areas of the bottom part of the module frame 200 excluding a portion in which the lower plate 310 makes contact with the bottom part of the module frame 200, whereby all the portions of the battery cell stack 100, which are disposed so as to occupy most of areas of the bottom part of the module frame 200, can be uniformly cooled.

The portion at which the flow passage part 340 is bent may be formed of a curved surface. Accordingly, the portion at which a partition wall 350 is bent may also be formed of a curved surface. When angled edge portions are formed in the flow passage part 340, it is likely that a flow of the refrigerant will stagnate at the angled edge portions, thus increasing a temperature deviation and a pressure drop. In this regard, if the bending part is treated with curved surfaces as in the embodiment of the present disclosure, the flow of the refrigerant can be made naturally.

The cooling port 500 is connected to the upper surface of the module frame protrusion part 211 so that the refrigerant is supplied to the heat sink 300 through the module frame protrusion part 211. In more detail, as shown in FIG. 6, a heat sink connection port 211a is formed in the module frame protrusion part 211, and a heat sink connection port 211a is formed on the lower surface of the module frame protrusion part 211 and is connected to the inlet 320 and the outlet 330 connected to the heat sink 300, and the refrigerant supplied through the cooling port 500 may be passed through the heat sink connection port 211a and flown into the inside of the heat sink via the inlet 320. The refrigerant flown out from the inside of the heat sink 300 via an outlet 330 can pass through the heat sink connection port 211a to be discharged to the cooling port 500 via the outlet 330.

Referring to FIG. 6 again, a refrigerant tube 511 may be formed in the center of the cooling port 500. The refrigerant may flow in and out through the refrigerant tube 511and then through the heat sink connection port 211a, the inlet 320 and the outlet 330. First coupling holes 512 may be formed at both end lower sides of the cooling port 500. The cooling port 500 and the bracket 520 may be coupled to each other through the first coupling hole 512. The cooling port 500 may be coupled to the bracket 520 located at the lower side. The bracket 520 is disposed between the cooling port 500 and the module frame protrusion part 211, and functions as a connecting member so that the cooling port 500 can be bound onto the module frame protrusion part 211. However, in the absence of the bracket 520, the cooling port 500 may be directly coupled to the module frame protrusion part 211. The bracket 520 may include a bracket connection port 521 formed at the center and second coupling holes 522 formed on both sides of the bracket connection ports 521.

The bracket connection port 521 can be disposed between a refrigerant tube 511 and a heat sink connection port 211a to connect the refrigerant tube 511 and the heat sink connection port 211a. Therefore, the refrigerant that has passed through the refrigerant tube 511 can pass through the bracket connection port 521 and the heat sink connection port 211a in this order to be flown into the inlet 320, and the refrigerant flown out through the outlet 330 can pass through the heat sink connection port 211a, the bracket connection port 521, and the refrigerant tube 511 in this order to be discharged to the outside.

The second coupling holes 522 may be formed on both sides of the bracket connection port 521. Third coupling holes 211b may be formed on both sides of the upper surface of the module frame protrusion part 211. The second coupling hole 522 and the third coupling hole 211b are formed at positions corresponding to the first coupling holes 512 formed on both lower sides of the cooling port 500, and a bolt 540 is inserted so as pass through the first coupling holes 512, the second coupling holes 522 and the third coupling holes 211b to firmly couple the cooling port 500, the bracket 520, and the module frame protrusion port 211.

The gasket 530 is formed in an annular shape, and may be disposed between the cooling port 500 and the bracket 520. In more detail, the gasket 530 is disposed between the refrigerant tube 511 and the bracket connection port 521 and seals between the refrigerant tube 511 and the bracket connection port 521, thereby preventing the refrigerant from leaking between the cooling port body part 510 and the bracket 520. In addition, the gasket 530 may be formed of a rubber material to obtain flexibility of the cooling port body part 510 connected to the gasket 530.

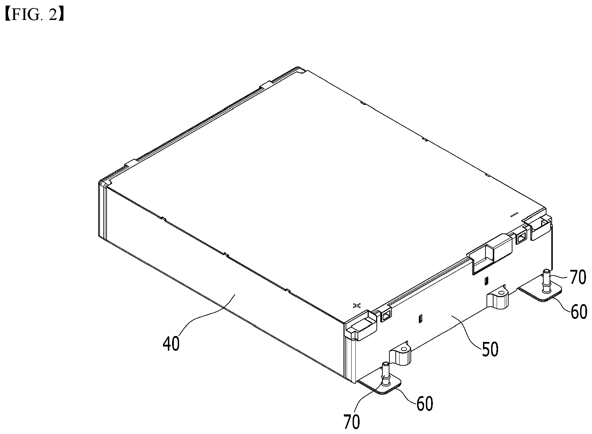

Hereinafter, referring to FIGS. 5 to 7 and FIGS. 8 to 10, a method for manufacturing a battery module to which a cooling port is coupled according to an embodiment of the present disclosure will be described in comparison with a comparative example illustrated in FIGS. 2 to 4.

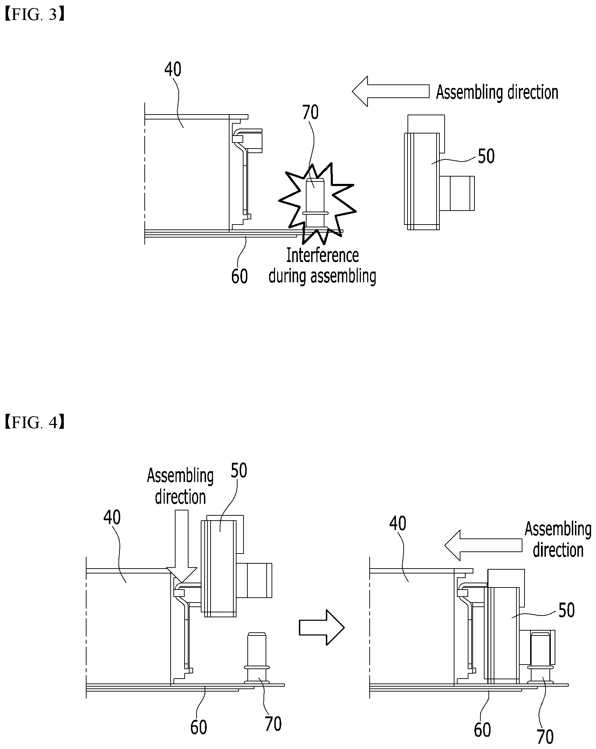

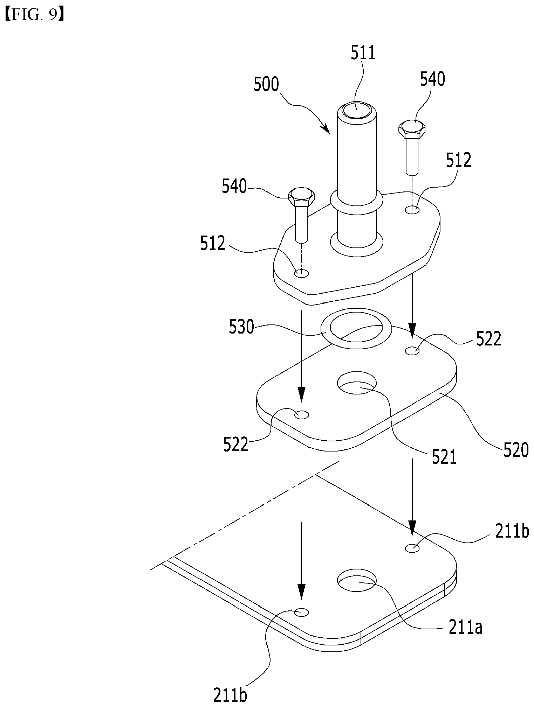

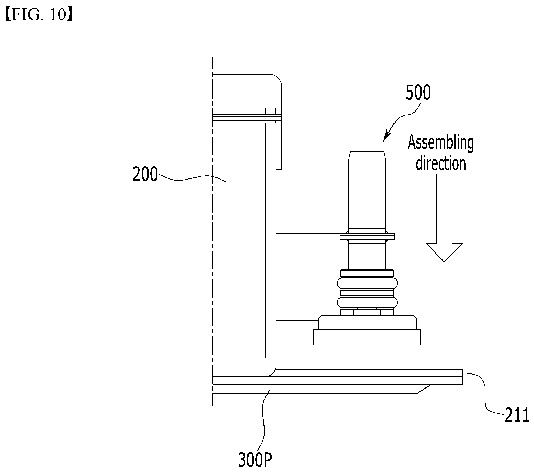

FIG. 2 is a view illustrating the battery module illustrated as a comparative example. FIG. 3 is a view illustrating an interference due to the cooling port when assembling the end plate formed in FIG. 2. FIG. 4 is a view illustrating a state in which the end plate of FIG.3 is assembled away from the cooling port. FIG. 8 is a view illustrating a state in which the end plate is assembled according to an embodiment of the present disclosure. FIG. 9 is a view illustrating a state in which a cooling port is assembled according to an embodiment of the present disclosure. FIG. 10 is a view illustrating a state in which the cooling port of FIG. 9 is assembled, as viewed from the side.

Referring to FIGS. 2 to 4, a battery module according to a comparative example of the present disclosure may include a module frame 40 for housing the battery cell stack, end plates 50 for covering front and rear surfaces of the battery cell stack, a module frame protrusion part 60 protruded and formed from the bottom part of the module frame 40, and a cooling port 70 formed at an upper surface part of the module frame protrusion part 60.

Conventionally, the cooling port 70 is coupled to the module frame protrusion part 60 during manufacture of the module frame 40 to thereby assemble the end plate 50 in a state in which a module frame assembly is formed. Here, as illustrated in FIG. 3, when the end plate 50 is assembled in a direction that is perpendicular to an attached surface of the end plate, an interference may occur during assembling due to the cooling port 70 protruded upwards from the module frame protrusion part 60. Accordingly, in order to assemble the end plate 50, as illustrated in FIG. 4, the end plate 50 is moved in a lower side direction in which the module frame protrusion part 60 is located, while vertically standing towards a space between the cooling port 70 and the module frame 40, and then is again moved in a direction which is perpendicular to the attached surface of the end plate to thereby assemble the end plate 50.

As illustrated in FIG. 4, because the end plate 50 has to be assembled through two steps, there was problem that an assembly process becomes complicated and high transfer precision is required to couple the end plate 50 with the edge portions of the module frame 40.

Thus, the method for manufacturing a battery module according to an embodiment of the present disclosure sequentially performs a step of coupling the end plate 400 to the front and rear ends of the module frame 200 in which the battery cell stack is housed (FIG. 8), and a step of coupling the cooling port on the module frame protrusion part 211 (FIGS. 9 and 10). That is, by coupling the end plate 400 to the module frame 200 first, and then coupling the coupling the cooling port 500 to the module frame protrusion part 211, the assembling process of the end plate 400 can be simplified and the difficulty of assembly can be improved.

In the step of coupling the end plate 400 to the front and rear ends of the module frame 200, the end plate 400 is moved along the first direction, which is the assembling direction shown in FIG. 8, then the end plate 400 is coupled with the module frame 200, the end plate 400 is coupled to the module frame 200, then the cooling port is moved along the second direction, which is the assembling direction shown in FIG. 10 intersecting with the first direction, and then connected to the module frame protrusion part 211.

In this case, the first direction may be a direction vertically directing to a surface that forms the edges of the module frame 200 coupled to the end plate 400. The end plate 400 may be coupled by welding to the edges of the module frame 200. The second direction may be a direction vertically directing to the upper surface of the module frame protrusion part 211.

The step of coupling the cooling port 500 and the bracket 520 with the module frame protrusion 211 by a fastening member may include a step of aligning a first coupling hole 512 formed on both sides of the lower end of the cooling port 500, a second coupling hole 522 formed on both sides of the bracket 520, and a third coupling hole 211b formed on both sides of the module frame protrusion part 211, and a step of inserting a bolt 540 so as to penetrate the first coupling hole 512, the second coupling hole 522, and the third coupling hole 211b.

In the step of aligning the first coupling hole 512 and the second coupling hole 522 formed on both sides of the bracket 520, a step of aligning the refrigerant tube 511 with the bracket connection port 521 may be further included.

In the step of coupling the cooling port 500 to the bracket 520, a step of inserting the gasket 530 between the cooling port 500 and the bracket 520 may be further included. The cooling port 500 and the bracket 520 may be connected through the assembling process disclosed in these steps.

In the step of connecting the cooling port 500 to the module frame protrusion port 211, the cooling port 500 can move downward to be connected to the upper surface of the module frame protrusion part 211. At this time, the cooling port 500 and the module frame protrusion part 211 may be coupled so that the bracket connection port 521 formed on the cooling port 500 aligns with the heat sink connector 211a formed on the upper surface of the module frame protrusion part 211.

The above-mentioned battery module can be included in the battery pack. The battery pack may have a structure in which one or more of the battery modules according to this embodiment are gathered, and packed together with a battery management system (BMS) and a cooling device that control and manage battery's temperature, voltage, etc.

The battery pack can be applied to various devices. These devices may be applied to transportation means such as an electric bicycle, an electric vehicle, a hybrid vehicle, but the present disclosure is not limited thereto and can be applied to various devices that can use the battery module, which also falls under the scope of the present disclosure.

Although the preferred embodiments of the present disclosure have been illustrated and described, the present disclosure is not limited to the above-described particular embodiments, various modifications can be made by those skilled in the art without departing from the scope and spirit as disclosed in the accompanying claims, and these modifications should not be understood separately from the scope and spirit of the invention.

### [Description of Reference Numerals]

200: module frame
210: lower frame
211: module frame protrusion part
211a: heat sink connection port
220: upper plate
300: heat sink
400: end plate
500: cooling port
510: cooling port body part
511: refrigerant tube
512: first coupling hole
520: bracket
521: bracket connection port
522: second coupling hole
530: gasket
540: bolt

## Claims

1. A battery module comprising:
a battery cell stack in which a plurality of battery cells are stacked;
a module frame for housing the battery cell stack;
end plates for covering front and rear surfaces of the battery cell stack;
a heat sink formed on a bottom part of the module frame; and
a cooling port configured to supply a refrigerant to the heat sink,
wherein the module frame comprises a module frame protrusion part, which is extended and formed so as to pass through the end plates on the bottom part of the module frame, and
wherein the cooling port is disposed in a shape protruding upward from an upper surface of the module frame protrusion part.

2. The battery module according to claim 1,
wherein the cooling port is coupled to the module frame protrusion part by a fastening member.

3. The battery module according to claim 1,
which further comprises a bracket located between the cooling port and the upper surface of the module frame protrusion part.

4. The battery module according to claim 3,
which further comprises a gasket formed between the cooling port and the bracket.

5. The battery module according to claim 4,
wherein first coupling holes are formed on both sides of the lower end of the cooling port, second coupling holes are formed on both sides of the bracket, third coupling holes are formed on both sides of the module frame protrusion part, and
the fastening member is inserted so as to penetrate the first coupling hole, the second coupling hole, and the third coupling hole to couple the cooling port and the bracket.

6. The battery module according to claim 4,
wherein a refrigerant tube is formed in the center of the cooling port, and the refrigerant tube is connected to a heat sink connection port formed on the module frame protrusion part.

7. The battery module according to claim 6,
wherein a bracket connection port is formed in the center of the bracket, the bracket connection port is formed between the coolant tube and the heat sink connection port, thereby connecting the coolant tube and the heat sink connection port.

8. The battery module according to claim 7,
wherein the gasket is formed in an annular shape, and is located between the refrigerant tube and the bracket connection port to seal between the refrigerant tube and the bracket connection port.

9. The battery module according to claim 1,
which further comprises a heat sink protrusion part formed so as to correspond to the module frame protrusion part.

10. A method for manufacturing a battery module, the method comprising the steps of:
coupling end plates to the front and rear ends of a module frame in which a battery cell stack is housed; and
coupling a cooling port on a module frame protrusion part, with the module frame protrusion part being extended and formed so as to pass through the end plates on the bottom part of the module frame,
wherein the step of coupling the end plate to the module frame comprises moving the end plates along a first direction and then coupling the end plates to the module frame, and
after the end plates are coupled to the module frame, the cooling port is moved along a second direction intersecting with the first direction, and then connected to the module frame protrusion part.

11. The method for manufacturing a battery module according to claim 10,
which further comprises a step of coupling the cooling port and a bracket located at the lower end of the cooling port to the module frame protrusion part by a fastening member.

12. The method for manufacturing a battery module according to claim 11,
wherein the step of coupling the cooling port and the bracket to the module frame protrusion part by a fastening member comprises,
a step of aligning a first coupling hole formed on both sides of the lower end of the cooling port, a second coupling hole formed on both sides of the bracket, and a third coupling hole formed on both sides of the module frame protrusion part; and
a step of inserting a bolt so as to penetrate the first coupling hole, the second coupling hole, and the third coupling hole.

13. The method for manufacturing a battery module according to claim 11,
wherein the step of coupling the cooling port and the bracket to the module frame protrusion part by a fastening member further comprises a step of inserting a gasket between the cooling port and the bracket.

14. The method for manufacturing a battery module according to claim 10,
wherein in the step of coupling the end plate to the module frame, the first direction is a direction vertically directing to a surface that forms an edge of the module frame coupled to the end plate.

15. The method for manufacturing a battery module according to claim 10,
wherein the second direction is a direction perpendicular to an upper surface of the module frame protrusion part.

16. A battery pack comprising the battery module according to claim 1.
